(19) Europäisches Patentamt

European Patent Office

Office européen des brevets

(11) Publication number: **0 061 824**
**B1**

(12) **EUROPEAN PATENT SPECIFICATION**

(45) Date of publication of patent specification: **07.05.86**

(51) Int. Cl.⁴: **H 02 P 6/02, G 05 D 13/62**

(21) Application number: **82300383.5**

(22) Date of filing: **26.01.82**

(54) A digital speed control device for a motor.

(30) Priority: **27.03.81 US 248644**

(43) Date of publication of application:
**06.10.82 Bulletin 82/40**

(45) Publication of the grant of the patent:
**07.05.86 Bulletin 86/19**

(84) Designated Contracting States:
**DE FR GB**

(56) References cited:
**DE-A-2 529 524**
**FR-A-2 296 299**
**US-A-3 753 067**
**US-A-3 783 357**
**US-A-3 950 682**

**IBM TECHNICAL DISCLOSURE BULLETIN, vol.
14, no. 2, July 1971, pages 396-397, New York,
USA B.J. HOLMAN: "Pulse width modulation
velocity servomechanism"**

(73) Proprietor: **MAGNETIC PERIPHERALS INC.**
**8100-34th Avenue South**
**Minneapolis Minnesota 55440 (US)**

(72) Inventor: **Elliott, Mark Lowell**
**1524 East 77th Street**
**Richfield Minnesota 55423 (US)**

(74) Representative: **Caro, William Egerton et al
J. MILLER & CO. Lincoln House
296-302 High Holborn
London WC1V 7JH (GB)**

Courier Press, Leamington Spa, England.

## Description

This invention relates to digital speed control devices for motors, for example brushless motors.

Known speed control devices for brushless motors utilise a speed sensing technique and a power control technique. Speed sensing techniques used are:

(1) frequency-to-voltage conversion involving converting signals related to rotor position to a voltage proportional to the speed of rotation of the rotor and comparing this with a reference signal to develop an error signal;

(2) a phase locked loop wherein a signal indicative of rotor position in phase compared with a reference signal to develop an error signal; and

(3) a digital measurement of rotation time from signals indicative of rotor position which time is compared with a reference time period to develop an error signal.

Power control techniques used are:

(1) a linear control wherein the error signal controls a linear regulator for motor drive voltage or current;

(2) an on/off control turning the power off at nominal speed or on and off over fixed-width control periods; and

(3) pulse-width modulation in which the error signal is used to control the duty cycle of power continuously applied to the motor.

The present invention generally employs the third-mentioned of these techniques in an improved, cost-effective fashion suitable in those environments where brushless motors are to be driven at a constant speed.

IBM Technical Disclosure Bulletin, Vol. 14, No. 2, July 1971, pages 396 and 397, discloses a digital speed control device for a motor, comprising sensor means for producing a periodic output upon a rotation of a rotor of a motor, timing means for measuring an actual time period between successive outputs of the sensor means, comparison means for detecting the difference time period by which the actual time period exceeds a reference time period, and pulse processing means including responsive to said comparison means for controlling the pulse width in proportion to the difference time period.

DE—A—2529524 and US—A—3950682 describe various means by which pulse widths may be modulated.

In none of these documents is there any reference to the synchronisation of the modulating pulse with the commutating circuits used to power the windings of a commutated motor.

The present invention is concerned with the speed control of a commutated motor and seeks to minimise the number of power switching transients by synchronising the modulating pulses with the commutating circuit switching.

According to the present invention, a digital speed control device for a motor, comprising sensor means for producing a periodic output on rotation of a rotor of a motor, timing means for measuring an actual time period between successive outputs of the sensor means, comparison means for detecting the different time period by which the actual time period exceeds a reference time period, and pulse processing means including means responsive to said comparison means for controlling the pulse width in proportion to the difference time period, is characterised in that the motor is a commutated motor provided with commutation control circuit means for controlling the switching of power to the windings of the motor, in that sensor means produces a plurality of periodic outputs upon a rotation of the rotor, which outputs are applied to the commutation control circuit means to direct the application of power to the windings during rotation of the rotor, in that storage means retains the difference time period from one rotation of the motor rotor during the next rotation, and in that the pulse processing means comprises pulse delay timing means responsive to the stored difference time period from the storage means and the periodic outputs from the sensor means to delay the application of power to the windings of the motor responsive to each output by an amount directly proportional to the stored difference time period.

The invention is illustrated, merely by way of example, in the accompanying drawings, in which:—

Figure 1 is a block diagram of a digital speed control device according to the present invention for a brushless DC motor; and

Figure 2 is a timing chart showing the waveform of various signals appearing during operation of the digital speed control device of Figure 1.

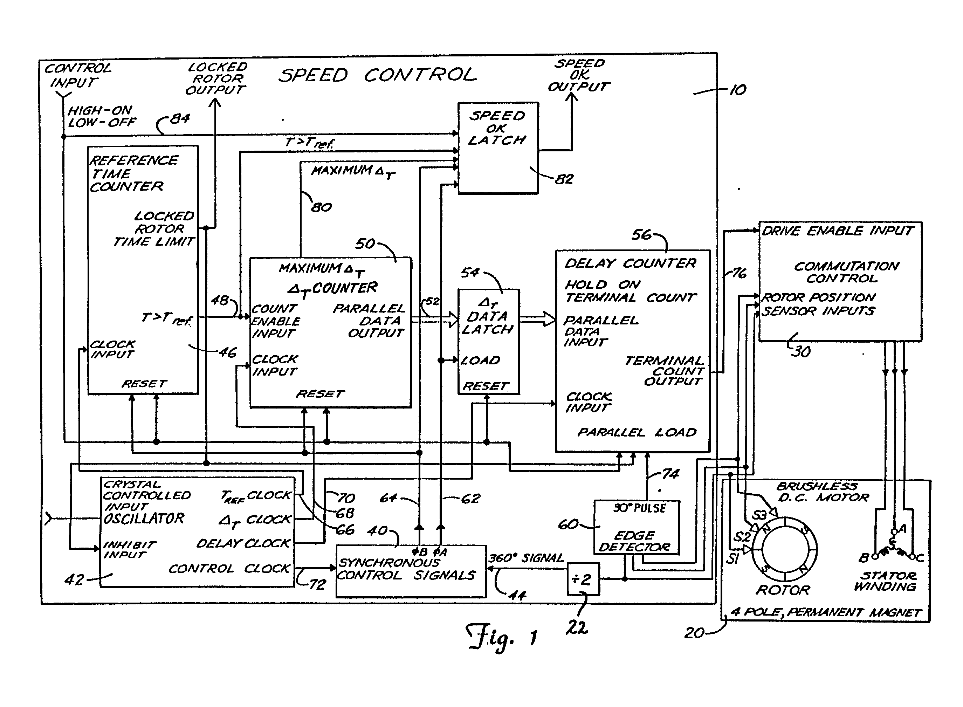

Referring to Figure 1, there is shown a digital speed control device 10 according to the present invention for a conventional brushless DC motor 20 having a conventional commutator power control logic circuit 30. While the present invention is described in relation to a brushless DC motor, it will be appreciated that it may be applied to any DC motor.

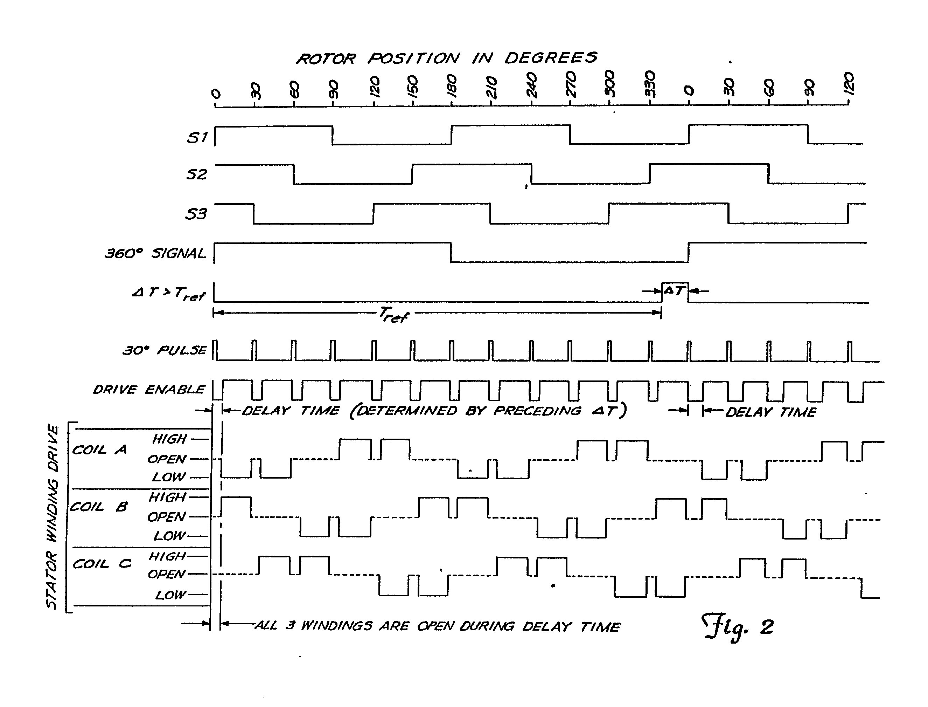

The rotor of the brushless DC motor 20 is of the 4-pole permanent magnet type. Sensors S1 to S3 which may, for example, be Hall effect devices, are spaced from each other by 30°. On rotation of the rotor, the sensors each produce a periodic signal, as shown by waveforms S1, S2, S3 in Figure 2. The signal produced by the sensor S1 is fed to a divide-by-two circuit 22, the output of which on a line 44 is a 360° signal also shown in Figure 2. As can be seen from Figure 2, the 360° signal on the line 44 has a positive going transition for each 360° of rotation of the rotor. The sensors S1 to S3 also provide signals to the power control logic circuit 30 which switches DC power alternately to stator windings A, B, C of the brushless DC motor.

The leading edge of the 360° signal on the line 44 triggers a two-cycle control circuit 40 which produces mutually exclusive signals φA, φB on lines 62, 64 respectively. The signal φA causes the

output from a $\Delta_T$ counter 50 to be loaded into a $\Delta_T$ latch 54. The signal $\phi B$ causes a reference time counter 46 and the $\Delta_T$ counter 50 to be reset. The signals $\phi A$, $\phi B$ are synchronised with a control signal from a crystal controlled clock 42 applied to the two-cycle control circuit on a line 72.

In the preferred embodiment, where it is desired to control the brushless DC motor 20 so that its rotor rotates at 3 600 rpm, the crystal controlled clock 42, driven by a 4 MHz external clock source, produces the following clock signals: a 2 MHz clock signal on a line 66, a 1 MHz clock signal on a line 68, and a 62.5 kHz delay-counter clock signal on a line 70, the frequency of the delay-counter clock signal being one-sixteenth the frequency of the clock signal on the line 68.

On receipt of the signal $\phi B$, the reference time counter 46 is reset. The signal $\phi B$, as previously mentioned, signals the receipt of the 360° signal from the sensor S1. Thereafter the clock signal on the line 66 causes the reference time counter 46 to count at a rate of 2 MHz. Internal logic of the reference time counter compares the count in the reference counter 46 with a predetermined count which, in the preferred embodiment, is a count of 33,280, which represents 16.64 milliseconds. If the rotor of the brushless DC motor rotates through 360° in 16.64 milliseconds, its speed of rotation is 3,605.8 rpm.

When the count in the reference time counter exceeds the predetermined count a signal is produced on a line 48 indicating that the time period of the rotor exceeds a reference time period $T_{ref}$.

The signal on the line 48 is provided as a count-enable input to the $\Delta_T$ counter 50. On receipt of this signal, the $\Delta_T$ counter begins to count. The $\Delta_T$ counter increments at the rate of unity each microsecond since it receives the 1 MHz clock signal on the line 68 from the crystal controlled clock 42. In the preferred embodiment, the $\Delta_T$ counter is a six-bit counter, the maximum count representing 64 microseconds.

On the next receipt of a 360° signal from the sensor S1, the signal $\phi A$ is generated by the two-cycle control circuit 40, which causes the $\Delta_T$ latch 54 to copy the count present in the $\Delta_T$ counter 50 which is fed thereto on a line 52. Thereafter, the two-cycle control circuit 40 generates the signal $\phi B$, which resets the $\Delta_T$ counter 50 and the reference time counter 46. The $\Delta_T$ counter is of the type which holds on maximum count, i.e. it does not overflow to zero if incremented beyond its maximum count.

The signals from the sensors S1 to S3 are fed to a 30° pulse edge detector 60, which outputs a pulse signal on a line 74 for each 30° of rotation of the rotor, as can be seen from Figure 2. The pulse signal on the line 74 is provided as an input to a delay counter 56 and the rise of each pulse thereof causes the latter to copy the count present in the $\Delta_T$ latch 54. The fall of each pulse of the pulse signal on the line 74 causes the delay counter to begin counting up from the count just loaded therein towards a predetermined count or, in the case of the preferred embodiment, the maximum count of the delay counter which is a six-bit counter whose maximum count is 64. On reaching its maximum count, the delay counter holds the maximum count and produces a drive-enable signal on a line 76 to the power control logic circuit 30. On receipt of the drive-enable signal, power is applied to the stator windings A, B, C, as can be seen in the waveform labelled "drive-enable" in Figure 2. It will also be noted that, at every 30° of rotation of the rotor, the power control logic circuit 30 switches the power to different stator windings, as shown in the waveforms labelled "stator winding drive".

The delay counter 56 receives the delay clock signal from the crystal controlled clock 42 on the line 70 and since this is 16 times slower than the clock signal on the line 68, each microsecond count of the $\Delta_T$ counter 50 converts into a decrease of 16 microseconds in the delay time of the delay counter 56. If the delay counter counts its entire count before reaching maximum count, it would produce 64 counts of 16 microseconds giving a total maximum delay time of 1.024 milliseconds. If the rotor rotates at 3,605.8 rpm, the time between 30° pulses is 1.387 milliseconds. Thus, when the rotor is rotating at 3,605.8 rpm the count in the $\Delta_T$ counter 50 is zero and the delay counter 56 counts to produce maximum delay of 1.024 milliseconds, the power time on is thus 1.387 milliseconds minus 1.024 milliseconds which is equal to 0.363 milliseconds and this is the minimum power on time. As the speed of rotation of the rotor decreases, the time for the rotor to rotate through 30° as well as the percentage of time power is on during the period increases. This results in a rapid increase in power as speed falls, bringing the motor back up to nominal speed.

At speeds of rotation where the time period T counted by the reference time counter between two 360° pulses is less than or equal to the predetermined time period $T_{ref}$, the $\Delta_T$ counter 50 will produce a zero count and the delay counter 56 will count its maximum count producing a delay of 1.024 milliseconds. Similarly, when the time period T counted by the reference time counter exceeds the predetermined time period $T_{ref}$ by 64 or more microseconds, which represents 3592 rpm or less, the $\Delta_T$ counter will reach its maximum count and the delay counter 56 will copy this maximum count and "immediately" produce the drive-enable signal on the line 76, resulting in a minimal delay.

A "Speed OK" signal is generated by a speed OK latch 82 when the motor speed is above 3,592 rpm and below 3,605 rpm. The latch 82 monitors the reference time counter 46 via line 48 and the $\Delta_T$ counter 50 via a line 80. If the count in the $\Delta_T$ counter is the maximum count, the speed of rotation of the rotor is below 3,592 rpm. If the reference time counter 46 fails to reach the predetermined count, the speed of rotation is about 3,605.8 rpm.

A control signal on a line 84 serves as an on/off signal. If the control input signal is low level the counters are cleared and the drive-enable signal on the line 76 is inhibited.

It is to be understood that the clock frequencies, rotational speeds etc. referred to herein are by way of example only to assist understanding of the description of the operation of the preferred embodiment.

It will be appreciated that a digital speed control device according to the present invention may be arranged to drive a variable speed motor, means being provided to vary the predetermined count in the reference time counter 46.

An advantage of the digital speed control device 10 described above is that it may be manufactured on a single LSI chip which reduces cost. Also its design is flexible since the various counters may be made programmable which gives the ability for a single LSI chip to perform multiple functions and be used in different applications.

## Claims

1. A digital speed control device for a motor, comprising sensor means ($S_1$, 22) for producing a periodic output upon a rotation of a rotor of a motor (20), timing means (46) for measuring an actual time period (T) between successive outputs of the sensor means, comparison means (46, 50) for detecting the difference time period ($\Delta_T$) by which the actual time period (T) exceeds a reference time period ($T_{ref}$), and pulse processing means (56) including means responsive to said comparison means for controlling the pulse width in proportion to the difference time period, characterised in that the motor (20) is a commutated motor provided with commutation control circuit means (30) for controlling the switching of power to the windings of the motor, in that sensor means ($S_1$, $S_2$, $S_3$) produces a plurality of periodic outputs upon a rotation of the rotor, which outputs are applied to the commutation control circuit means to direct the application of power to the windings during rotation of the rotor, in that storage means (54) retains the difference time period from one rotation of the motor rotor during the next rotation, and in that the pulse processing means comprises pulse delay timing means (56) responsive to the stored difference time period from the storage means and the periodic outputs from the sensor means to delay the application of power to the windings of the motor responsive to each output by an amount directly proportional to the stored difference time period.

2. A digital speed control device as claimed in claim 1, characterised in that the timing means (46) includes first counter means for counting from an initial count in response to receipt of a first output from the sensor means.

3. A digital speed control device as claimed in claim 2, characterised in that the comparison means comprises means for comparing the count in the first counter means with a predetermined count for producing an equality output signal when the counts are substantially equal, second counter means (50) being provided for starting counting from an initial count on receipt of the equality output signal and ending counting in response to receipt of a second output from the sensor means.

4. A digital speed control device as claimed in claim 3, characterised in that the pulse-delay timing means comprises delay-counter means (56) for receiving the count in the second counter means at the end of counting, means for counting up from the last-mentioned count to a predetermined count, and means (30) for enabling power to be applied to the motor.

5. A digital speed control device as claimed in claim 4, characterised by including means (22) for dividing the time period between the two outputs of the sensor means into a predetermined number of fixed time periods and means (40) for producing a pulse signal at the end of each period, latch means (54) for retaining the count in the second counter means at the end of counting between two outputs of the sensor means, the pulse-delay timing means including means responsive to each of the pulse signals for loading the contents of the latch means, the contents comprising the count in the second counter means at the end of counting from which the delay-counter means counts up.

6. A digital speed control device as claimed in claim 4 or 5, characterised in that the arrangement is such that the predetermined count is the maximum count of the second counter means.

7. A digital speed control device as claimed in any of claims 4 to 6, characterised in that the arrangement is such that the predetermined count is the maximum count of the delay-counter means.

8. A digital speed control device as claimed in any preceding claim, characterised in that the commutated motor comprises a brushless DC motor (20) and in that the signals from the sensor means (51, 52, 53) control when power to the stator windings (A, B, C) of the motor is switched.

9. A digital speed control device as claimed in any preceding claim, characterised in that, in response to the sensor means outputs causing the commutation control circuit means (30) to switch the motor windings to which power is applicable, the pulse processing means (56) directs the termination of power to the windings, whereby the windings are switched when no power is applied to reduce power transients.

## Patentansprüche

1. Digitaler Geschwindigkeitsregler für einen Motor, mit Fühlereinrichtungen (S1, 22) zur Erzeugung eines periodischen Ausgangssignals bei einer Drehung eines Rotors eines Motors (20), mit Zeitsteuereinrichtungen (46) zur Messung einer tatsächlichen Zeitperiode (T) zwischen aufeinanderfolgenden Ausgangssignalen der Fühlereinrichtungen, mit Vergleichereinrichtungen (46, 50) zur Feststellung der Differenzzeitperiode ($\Delta_T$), um

die die tatsächliche Zeitperiode (T) eine Bezugszeitperiode ($T_{ref}$) überschreitet, und mit Impulsverarbeitungseinrichtungen (56), die auf die Vergleichereinrichtungen ansprechende Einrichtungen zur Steuerung der Impulsbreite proportional zur Differenzzeitperiode einschließen, dadurch gekennzeichnet, daß der Motor (20) ein kommutierter Motor ist, der mit Kommutierungssteuerschaltungseinrichtungen (30) zur Steuerung des Schaltens von Leistung an die Wicklungen des Motors versehen ist, daß Fühlerein-richtungen ($S_1$, $S_2$, $S_3$) eine Anzahl von periodischen Ausgangssignalen bei einer Drehung des Rotors erzeugen, daß diese Ausgangssignale den Kommutierungssteuerschaltungseinrichtungen zugeführt werden, um die Zuführung von Leistung an die Wicklungen während der Drehung des Rotors zu steuern, daß Speichereinrichtungen (54) die Differenzzeitperiode von einer Drehung des Motors während der nächsten Drehung festhalten, und daß die Impulsverarbeitungseinrichtungen Pulsverzögerungs-Zeitsteuereinrichtungen (56) umfassen, die auf die gespeicherte Differenzzeitperiode von den Speichereinrichtungen und die periodischen Ausgangssignale von den Fühlereinrichtungen ansprechen, um die Zuführung von Leistung an die Wicklungen des Motors in Abhängigkeit von jedem Ausgangssignal um einen Betrag zu verzögern, der direkt proportional zur gespeicherten Differenzzeitperiode ist.

2. Digitaler Geschwindigkeitsregler nach Anspruch 1, dadurch gekennzeichnet, daß die Zeitsteuereinrichtungen (46) erste Zählereinrichtungen zum Zählen von einer Anfangszählung aus in Abhängigkeit vom Empfang eines ersten Ausgangssignals von den Fühlereinrichtungen einschließen.

3. Digitaler Geschwindigkeitsregler nach Anspruch 2, dadurch gekennzeichnet, daß die Vergleichereinrichtungen Einrichtungen zum Vergleich der Zählung in den ersten Zählereinrichtungen mit einer vorgegebenen Zählung zur Erzeugung eines Gleichheits-Ausgangssignals umfassen, wenn die Zählungen im wesentlichen gleich sind, und daß zweite Zählereinrichtungen (50) vorgesehen sind, die bei Empfang des Gleichheits-Ausgangssignals ausgehend von einer Anfangszählung aus zu zählen beginnen und die den Zählvorgang in Abhängigkeit von dem Empfang eines zweiten Ausgangssignals von den Fühlereinrichtungen beenden.

4. Digitaler Geschwindigkeitsregler nach Anspruch 3, dadurch gekennzeichnet, daß die Impulsverzögerungszeitsteuereinrichtungen Verzögerungszählereinrichtungen (56) zum Empfang der Zählung in den zweiten Zählereinrichtungen am Ende des Zählvorganges, Einrichtungen zum Aufwärtszählen ausgehend von der letztgenannten Zählung zu einer vorgegebenen Zählung und Einrichtungen (30) zur Freigabe der Leistungszuführung an den Motor umfassen.

5. Digitaler Geschwindigkeitsregler nach Anspruch 4, dadurch gekennzeichnet, daß Einrichtungen (22) zur Unterteilung der Zeitperiode zwischen zwei Ausgangssignalen der Fühlereinrichtungen in eine vorgegebene Anzahl von festen Zeitperioden und Einrichtungen (40) zur Erzeugung eines Impulssignals am Ende jeder Zeitperiode sowie Signalspeichereinrichtungen (54) zum Halten der Zählung in den zweiten Zählereinrichtungen am Ende der Zählung zwischen zwei Ausgangssignalen der Fühlereinrichtungen vorgesehen sind, und daß die Impulsverzöge-rungszeitsteuereinrichtungen Einrichtungen ein-schließen, die auf jedes der Impulssignale anspre-chen, um den Inhalt der Signalspeichereinrichtungen zu laden, wobei der Inhalt die Zählung der zweiten Zählereinrichtungen am Ende der Zählung umfaßt, von der aus die Verzögerungseinrichtungen aufwärts zählen.

6. Digitaler Geschwindigkeitsregler nach Anspruch 4 oder 5, dadurch gekennzeichnet, daß die Anordnung derart getroffen ist, daß die vorgegebene Zählung die maximale Zählung für die zweiten Zählereinrichtungen ist.

7. Digitaler Geschwindigkeitsregler nach einem der Ansprüche 4 bis 6, dadurch gekennzeichnet, daß die Anordnung derart ist, daß die vorgegebene Zählung die maximale Zählung der Verzögerungszählereinrichtungen ist.

8. Digitaler Geschwindigkeitsregler nach einem der vorhergehenden Ansprüche, dadurch gekennzeichnet, daß der kommutierte Motor ein bürstenloser Gleichspannungsmotor (20) ist und daß die Signale von der Fühlereinrichtungen (51, 52, 53) den Zeitpunkt steuern, zu dem die Leistung an die Statorwicklungen (A, B, C) des Motors geschaltet wird.

9. Digitaler Geschwindigkeitsregler nach einem der vorhergehenden Ansprüche, dadurch gekenn-zeichnet, daß die Impulsverarbeitungseinrich-tungen (56) die Beendigung der Leistungszufuhr an die Wicklungen in Abhängigkeit davon steuern, daß die Ausgangssignale der Fühlereinrichtungen ein Schalten der Motorwicklungen, denen Leistung zuzuführen ist, durch die Kommu-tierungssteuerschaltungseinrichtungen (30) her-vorrufen, so daß die Wicklungen geschaltet werden, wenn diesen keine Leistung zugeführt wird, um Leistungsspitzen zu verringern.

**Revendications**

1. Dispositif de commande de vitesse numérique pour moteur, comprenant un moyen capteur (S1, 22) servant à produire un signal de sortie périodique avec la rotation d'un rotor du moteur (20), un moyen minuteur (46) servant à mesurer une période de temps réelle (T) entre signaux de sortie successifs du moyen capteur, un moyen de comparaison (46, 50) servant à déterminer la différence de temps ($\Delta_T$) dont la période de temps réelle (T) dépasse une période de temps de référence ($T_{ref}$), et un moyen (56) de traitement d'impulsion comportant un moyen qui répond audit moyen de comparaison en ajustant la largeur d'impulsion proportionnellement à la différence de temps, caractérisé en ce que le moteur (20) est un moteur commuté qui est doté d'un circuit de commande de commutation servant à commander les interruptions de l'alimentation électrique des enroulements du moteur, en ce qu'un moyen capteur (S1, S2, S3) produit plusieurs signaux de sortie périodiques avec la rotation du rotor, lesquels signaux de sortie sont appliqués au circuit de commande de commutation afin d'ordonner l'application de l'alimentation électrique aux enroulements pendant la rotation du rotor, en ce qu'un moyen d'emmagasinage (54) retient la différence de temps d'une rotation du rotor du moteur pendant la rotation suivante, et en ce que le moyen de traitement d'impulsion comprend un moyen (56) de mesure de temps de retard d'impulsion qui répond à la différence de temps emmagasinée venant du moyen d'emmagasinage et aux signaux de sortie périodiques venant du moyen capteur en retardant l'application de l'alimentation électrique aux enroulements du moteur, en réponse à chaque signal de sortie, d'une quantité proportionnelle à la différence de temps emmagasinée.

2. Dispositif de commande de vitesse numérique selon la revendication 1, caractérisé en ce que le moyen minuteur (46) comporte un premier moyen compteur servant à compter à partir d'une valeur de comptage initiale en réponse à la réception d'un premier signal de sortie du moyen capteur.

3. Dispositif de commande de vitesse numérique selon la revendication 2, caractérisé en ce que le moyen de comparaison comprend un moyen permettant de comparer la valeur de comptage contenue dans le premier moyen compteur avec une valeur de comptage prédéterminée afin de produire un signal de sortie d'égalité lorsque les valeurs de comptage sont sensiblement égales, un deuxième moyen compteur (50) étant prévu pour faire démarrer le comptage à partir d'une valeur de comptage initiale à la réception du signal de sortie d'égalité et pour mettre fin au comptage en réponse à la réception d'un deuxième signal de sortie du moyen capteur.

4. Dispositif de commande de vitesse numérique selon la revendication 3, caractérisé en ce que le moyen de mesure de temps de retard d'impulsion comprend un moyen compteur de retard (56) servant à recevoir la valeur de comptage du deuxième moyen compteur à la fin du comptage, un moyen servant à compter positivement à partir de la valeur de comptage mentionnée en dernier jusqu'à une valeur de comptage prédéterminée, et un moyen (30) servant à valider l'application de l'alimentation électrique au moteur.

5. Dispositif de commande de vitesse numérique selon la revendication 4, caractérisé en ce qu'il comporte un moyen (22) servant à diviseur la période de temps existant entre les deux signaux de sortie du moyen capteur en un nombre prédéterminé de périodes de temps fixes et un moyen (40) servant à produire un signal d'impulsion à la fin de chaque période, un moyen de verrouillage (54) servant à retenir la valeur de comptage du deuxième moyen compteur à la fin du comptage entre deux signaux de sortie du moyen capteur, le moyen de mesure de temps de retard d'impulsion comportant un moyen qui répond à chacun des signaux d'impulsion en chargeant le contenu du moyen de verrouillage, le contenu comprenant la valeur de comptage du deuxième moyen compteur à la fin du comptage à partir de quoi le moyen compteur de retard compte positivement.

6. Dispositif de commande de vitesse numérique selon la revendication 4 ou 5, caractérisé en ce que le montage est ainsi conçu que la valeur de comptage prédéterminée est la valeur de comptage maximale du deuxième moyen compteur.

7. Dispositif de commande de vitesse numérique selon l'une quelconque des revendications 4 à 6, caractérisé en ce que le montage est ainsi conçu que la valeur de comptage prédéterminée est la valeur de comptage maximale du moyen compteur de retard.

8. Dispositif de commande de vitesse numérique selon l'une quelconque des revendications précédentes, caractérisé en ce que le moteur commuté comprend un moteur (20) à courant continu sans balais et en ce que les signaux venant du moyen capteur (51, 52, 53) commandent les moments où l'alimentation électrique des enroulements de stator (A, B, C) du moteur subit des interruptions.

9. Dispositif de commande de vitesse numérique selon l'une quelconque des revendications précédentes, caractérisé en ce que, en réponse aux signaux de sortie du moyen capteur faisant que le circuit (30) de commande de commutation fait commuter les enroulements du moteur auxquels l'alimentation électrique est applicable, le moyen (50) de traitement d'impulsion ordonne la cessation de l'alimentation électrique des enroulements, si bien que les enroulements commutent lorsqu'aucune alimentation électrique ne leur est appliquée afin de diminuer les signaux transitoires d'alimentation électrique.

Fig. 1

ROTOR POSITION IN DEGREES

Fig. 2